# EUROPÄISCHE PATENTANMELDUNG

(11) **EP 3 588 218 A1**
(43) Veröffentlichungstag der Anmeldung: **01.01.2020**
(21) Anmeldenummer: 18179514.7
(22) Anmeldetag: 25.06.2018
(51) Int. Cl.: G05B 19/401, G05B 19/4097, G05B 19/4099

(54) **VERFAHREN ZUR BEARBEITUNG EINES WERKSTÜCKS ZUR FERTIGUNG EINES HEISSGASTEILS**

(71) Anmelder: Siemens Aktiengesellschaft, 80333 München (DE)
(72) Erfinder: Schuh, Carsten, 85598 Baldham (DE)

(57) **Zusammenfassung**

Bei dem Verfahren zur Bearbeitung eines Werkstücks zur Fertigung eines Heissgasteils wird zunächst ein CAD-Modell für das Werkstück herangezogen, es wird eine aktuelle Form des Werkstücks erfasst und mit dem CAD-Modell des Werkstücks einem Vergleich unterzogen. Abhängig von diesem Vergleich wird bei dem Verfahren ein CAM-Modell für die Bearbeitung bestimmt und das Werkstück gemäß dem CAM-Modell bearbeitet. Nachfolgend wird bei dem Verfahren das Werkstück einer Prüfung unterzogen und abhängig von der Prüfung das CAM-Modell aktualisiert.

## Beschreibung

Die Erfindung betrifft ein Verfahren zur Bearbeitung eines Werkstücks zur Fertigung eines Heissgasteils.

Bei Heissgasteilen wie Turbinenkomponenten, insbesondere Leitschaufeln, werden regelmäßig Kühlluftbohrungen mittels Laserbohrens eingebracht. Dies ist sowohl bei einer erstmaligen Fertigung der Heissgasteile als auch bei einer Instandsetzung der Heissgasteile nach einem erfolgten Betrieb erforderlich. Insbesondere im letzteren Fall besteht eine Herausforderung darin, eine Position und eine Orientierung von ggf. bereits vorhandenen Kühlluftbohrungen hinreichend genau zu bestimmen.

Eine Bestimmung der Position und der Orientierung von ggf. vorhandenen Kühlluftbohrungen erfolgt häufig durch Einnahme des Augenscheins und ggf. durch ein Einstecken von Stäbchen in einige dieser Kühlluftbohrungen. Dabei werden einige repräsentative Kühlluftbohrungen erfasst und Positionen und Orientierungen der übrigen Kühlluftbohrungen basierend auf jenen der erfassten Kühlluftbohrungen extrapoliert.

Vor diesem Hintergrund des Standes der Technik ist es daher Aufgabe der Erfindung, ein verbessertes Verfahren zur Bearbeitung eines Werkstücks zur Fertigung eines Heissgasteils zu schaffen, welches insbesondere mit höherer Präzision ausführbar ist.

Diese Aufgabe der Erfindung wird mit einem Verfahren mit den in Anspruch 1 angegebenen Merkmalen gelöst. Bevorzugte Weiterbildungen der Erfindung sind in den zugehörigen Unteransprüchen, der nachfolgenden Beschreibung und der Zeichnung angeben.

Bei dem erfindungsgemäßen Verfahren zur Bearbeitung eines Werkstücks zur Fertigung eines Heissgasteils wird zunächst ein CAD-Modell (CAD = (engl.) *"Computer-Aided Design"*) für das Werkstück herangezogen. Erfindungsgemäß wird zudem eine aktuelle Form des Werkstücks erfasst und mit dem CAD-Modell des Werkstücks einem Vergleich unterzogen. Abhängig von diesem Vergleich wird bei dem erfindungsgemäßen Verfahren ein CAM-Modell (CAM = (engl.) *"Computer-Aided Manufacturing"*) für die Bearbeitung bestimmt und das Werkstück gemäß dem CAM-Modell bearbeitet. Nachfolgend wird bei dem erfindungsgemäßen Verfahren das Werkstück einer Prüfung unterzogen und vorzugsweise wird abhängig von dem Ergebnis der Prüfung das CAM-Modell aktualisiert.

Vorteilhaft ist das erfindungsgemäße Verfahren aufgrund der verfahrensimmanent vorgesehenen Rückkopplung robust gegenüber Prozessschwankungen. Vorteilhaft bildet die Prüfung des Werkstücks nach Bearbeitung gemäß dem CAM-Modell einen übergeordneten Regelkreis, welcher eine besonders präzise Fertigung erlaubt. Zudem ist das erfindungsgemäße Verfahren leicht auf Werkstücke mit neuen Geometrien anwendbar, da das erfindungsgemäße Verfahren ein CAD-Modell des Werkstücks heranzieht. Manuelle Einstell- und Anpassungsvorgänge sind erfindungsgemäß nicht zwingend erforderlich. Das erfindungsgemäße Verfahren lässt sich vorteilhafterweise zudem leicht automatisieren.

In einer bevorzugten Weiterbildung des erfindungsgemäßen Verfahrens werden die letzten beiden Verfahrensschritte des zuvor erläuterten erfindungsgemäßen Verfahrens (entsprechend den letzten beiden Spiegelstrichen des Anspruchs 1) ein- oder mehrfach wiederholt, wobei der letzte Verfahrensschritt (entsprechend dem letzten Spiegelstrich des Anspruchs 1) oder das fakultative Merkmal des letzten Verfahrensschritts nach der letztmaligen Ausführung des vorletzten Verfahrensschritts entfallen können. Aufgrund der wiederholten Rückkopplung des erfindungsgemäßen Verfahrens ist eine äußerst robuste und zugleich präzise Fertigung möglich.

Besonders bevorzugt wird bei dem erfindungsgemäßen Verfahren abhängig von dem Vergleich des Modells des Heissgasteils mit der aktuellen Form des Werkstücks das CAM-Modell für die Bearbeitung derart bestimmt, dass abhängig von dem Vergleich ein Realmodell ermittelt wird und abhängig vom dem Realmodell das CAM-Modell bestimmt wird. Aufgrund der Ermittlung des Realmodells ist das erfindungsgemäße Verfahren hochgradig automatisierbar, da erfindungsgemäß bereits die reale Geometrie des Werkstücks berücksichtigt wird. Eine aufwendige und manuelle Nachsteuerung des Verfahrens aufgrund von Abweichungen des Werkstücks von Idealeigenschaften ist erfindungsgemäß folglich entbehrlich. Zudem und ebenfalls vorteilhaft werden die Bearbeitungsschritte des CAM-Modells während des Verfahrens fortlaufend an das Realmodell angepasst. Folglich werden die Auswirkungen einzelner Bearbeitungsschritte während der Bearbeitung selbst berücksichtigt, sodass unerwünschte Folgen einzelner Bearbeitungsschritte bereits prozessimmanent vermieden werden. Insbesondere sind mittels des erfindungsgemäßen Verfahrens unerwünschte Prozessrückstände wie insbesondere Schmelztropfen und/oder Schlacken vermeidbar.

Bei dem erfindungsgemäßen Verfahren wird vorteilhaft das Werkstück bearbeitet, indem Kühlkanäle, insbesondere mittels Bohrens und vorzugsweise mittels Laserbohrens, eingebracht werden.

In einer bevorzugten Weiterbildung des erfindungsgemäßen Verfahrens wird das Werkstück einer Prüfung unterzogen, indem es einem Wärme- und/oder Fluidstrom durch das Werkstück hindurch ausgesetzt wird. Auf diese Weise lässt sich die Ausbildung insbesondere von Kühlkanälen unter realistischen und daher praxisrelevanten Bedingungen testen. Denn mittels einer Durchströmung des Werkstücks erfolgt die Prüfung insbesondere von Innenwänden und/oder von Lochkanten von Kühlkanälen, etwa hinsichtlich einer Rauigkeit und/oder eines Fließverhaltens und/oder eines Staudrucks und/oder von Verwirbelungen, unter praxisrelevanten und daher besonders aussagekräftigen Bedingungen.

Zweckmäßig wird bei dem erfindungsgemäßen Verfahren das Werkstück bearbeitet und das Werkstück auch während es bearbeitet wird fortgesetzt einer Prüfung unterzogen, insbesondere indem es einem Wärme- oder Fluidstrom durch das Werkstück hindurch ausgesetzt wird. Unter einer fortgesetzten Prüfung des Werkstücks wird im Rahmen dieser Erfindung zweckmäßig eine kontinuierliche Prüfung und/oder eine Prüfung zu, insbesondere regelmäßig und vorzugsweise zeitlich äquidistant, aufeinanderfolgenden Zeitpunkten verstanden. In dieser Weiterbildung des erfindungsgemäßen Verfahrens bestehen zumindest zwei Regelkreise, d.h. Feedback-Schleifen im Sinne eines Closed-Loop-Prozesses auf unterschiedlichen Zeitskalen und Prozessebenen des erfindungsgemäßen Verfahrens. Diese Regelkreise erlauben eine besonders robuste und zugleich präzise Fertigung. Zweckmäßig bilden das Bearbeiten des Werkstücks nach dem CAM-Modell eine Stellgröße und das CAD-Modell des Werkstücks eine Regelgröße eines dieser Regelkreise.

Besonders bevorzugt ist bei dem erfindungsgemäßen Verfahren das Werkstück ein Rohling.

Alternativ und ebenfalls bevorzugt ist bei dem erfindungsgemäßen Verfahren das Werkstück ein in seinem Betrieb verändertes Heissgasteil.

Nachfolgend wird die Erfindung anhand eines in der Zeichnung dargestellten Ausführungsbeispiels näher erläutert. Die einzige Zeichnungsfigur 1 zeigt ein Ablaufdiagramm eines erfindungsgemäßen Verfahrens zur Fertigung einer Leitschaufel einer Gasturbine schematisch in einer Prinzipskizze.

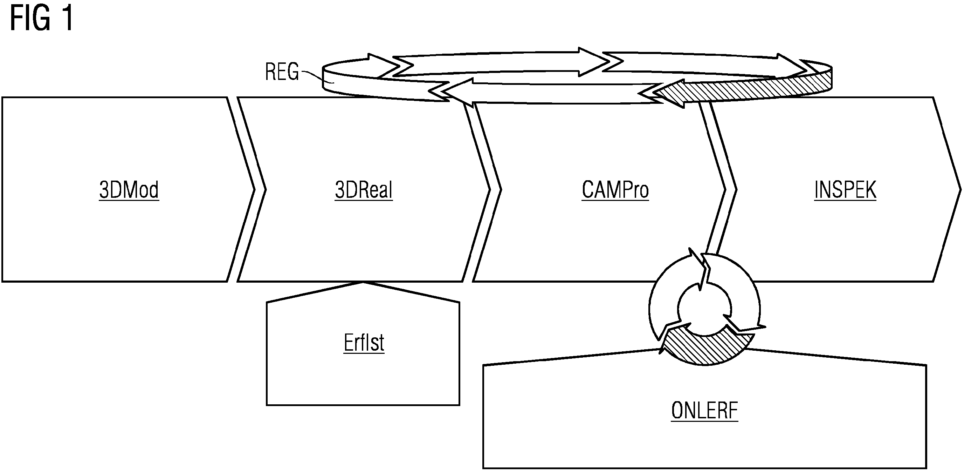

Das in Fig. 1 dargestellte erfindungsgemäße Verfahren ist ein Verfahren zur Fertigung einer Leitschaufel einer Gasturbine. In weiteren, nicht eigens dargestellten Ausführungsbeispielen dient das erfindungsgemäße Verfahren zur Fertigung einer Dampfturbine.

Bei dem Verfahren wird zunächst mittels einer CAD-Software (CAD = (engl.) *"Computer Aided Design"*), im dargestellten Ausführungsbeispiel beispielsweise *"Siemens NX",* ein 3D-Modell der Leitschaufel der Gasturbine entworfen, was den Verfahrensschritt 3DMod bildet. In einem weiteren, nicht eigens dargestellten Ausführungsbeispiel, welches im Übrigen dem Dargestellten entspricht, wird das 3D-Modell der Leitschaufel nicht eigens entworfen, sondern auf andere Weise erhalten, beispielsweise durch Mitteilung eines Kooperationspartners.

Bei dem Verfahren wird ein Werkstück, im dargestellten Ausführungsbeispiel ein Rohling für die Leitschaufel, herangezogen. In weiteren, nicht eigens dargestellten Ausführungsbeispielen kann anstelle eines Rohlings eine im Feldeinsatz aufgrund langandauernden Betriebs veränderte, insbesondere beschädigte, Leitschaufel als Werkstück herangezogen werden. In einem weiteren Verfahrensschritt ErfIst wird die Ist-Geometrie des Werkstücks erfasst, im dargestellten Ausführungsbeispiel mittels einer laserbasierten optischen Erfassung der Gestalt des Werkstücks, etwa mittels eines interferometrischen Verfahrens.

In einem weiteren Verfahrensschritt 3DReal wird mittels der erfassten Ist-Geometrie ein 3D-Realmodell konstruiert. Dieses 3D-Realmodell und das mittels des Verfahrensschritts 3DMod modellierte 3D-Modell des Werkstücks werden miteinander einem Vergleich unterzogen.

Aus den Abweichungen zwischen 3D-Modell und 3D-Realmodell werden CAM-Bearbeitungsschritte (CAM = (engl.) *"Computer-Aided Manufacturing"*) zur Bearbeitung des Werkstücks abgeleitet und einer Bearbeitungseinrichtung, im dargestellten Ausführungsbeispiel eine Laserbohreinrichtung mit einem Laserbohrer, übermittelt, welche eingerichtet ist, mittels Laserbohrens Kühlluftbohrungen in die Leitschaufeln einzubringen. Die CAM-Bearbeitungsschritte berücksichtigen die Ist-Geometrie der Leitschaufel und umfassen eine Anpassung einer räumlichen Position und einer Laserleistung des Laserbohrers sowie eine Anpassung eines Profils und eines Winkels des Laserstrahls und zudem eine Anpassung einer Pulsform und einer Pulsdauer des Laserbohrers derart, dass die im 3D-Modell der Leitschaufel vorgesehene Geometrie durch die CAM-Bearbeitungsschritte des Werkstücks mit der Ist-Geometrie so präzise wie möglich erreicht wird.

Mittels dieser abgeleiteten CAM-Bearbeitungsschritte wird das Werkstück im Verfahrensschritt CAMPRO mit entsprechend angepassten Prozessparametern, hier wie oben beschrieben Laserleistung und Profil und Winkel des Laserstrahls des Laserbohrers sowie Pulsdauer und Pulsform des Laserlichts des Laserbohrers, bearbeitet. Dabei wird der Bearbeitungsprozess während des Verfahrensschritts CAMPRO kontinuierlich mittels eines geschlossenen Regelkreises ONLERF auf eine Fertigung gemäß dem 3D-Modell geregelt. Dazu bilden die CAM-Bearbeitungsschritte eine Stellgröße und das 3D-Modell eine Regelgröße des Regelkreises. Dabei wird das Werkstück während der CAM-Bearbeitungsschritte kontinuierlich oder in regelmäßigen Zeitabständen hinsichtlich der Geometrie des Werkstücks überwacht.

Vorliegend wird das Werkstück in regelmäßigen Zeitabständen mittels einer Staudruckmessung überwacht. Bei der Staudruckmessung wird das Werkstück an einem Ende der mittels der CAM-Bearbeitungsschritte bearbeiteten Kühlluftbohrungen mit einem Prüfdruck beaufschlagt und an einem anderen Ende der Kühlluftbohrung wird mittels eines MEMS-Arrays, hier eines Piezo-Arrays, der Druckabbau durch die Kühlluftbohrungen hindurch gemessen. Die Messungen werden mit Vergleichswerten, welche aufgrund des vorgesehenen 3D-Modells des Werkstücks zu erwarten sind, in einem Verfahrensschritt INSPEK verglichen. Aufgrund dieses Vergleichs werden die CAM-Bearbeitungsschritte bei sich während des Verfahrensschritts CAMPRO abzeichnenden Abweichungen oder Prozessdriften nachgeregelt.

In einem weiteren, nicht eigens dargestellten Ausführungsbeispiel wird die Geometrie der Kühlluftbohrungen des Werkstücks im Regelkreis ONLERF mittels Thermographie überwacht, d.h. mittels einer Beobachtung der Abkühlung eines lokal beheizten Arrays im Bereich der Kühlluftbohrungen.

Zusätzlich zum Regelkreis ONLERF wird in einem weiteren, übergeordneten, Regelkreis REG nicht allein die Bearbeitung des Werkstücks CAMPRO mittels der CAM-Bearbeitungsschritte nachgeregelt, sondern es wird zusätzlich aufgrund der im Verfahrensschritt INSPEK erhaltenen Messungen das herangezogene 3D-Realmodell aktualisiert, indem in einem erneuten durchgeführten Verfahrensschritt 3DReal ein an die aktuell erhaltenen Messungen angepasstes aktuelleres 3D-Realmodell konstruiert wird. Dazu kann der Verfahrensschritt INSPEK zusätzlich um eine optische Prüfung des Werkstücks ergänzt werden, etwa mittels einer laserbasierten optischen Erfassung der Gestalt des Werkstücks, insbesondere mittels eines interferometrischen Verfahrens.

Aufgrund dieses Vergleichs wird das 3D-Realmodell angepasst und entsprechend werden die Prozessparameter für die CAM-Bearbeitungsschritte aktualisiert, d.h. an die neue Ist-Geometrie angepasst. Nach dieser Aktualisierung der CAM-Bearbeitungsschritte wird das Werkstück im wiederholten Verfahrensschritt CAMPRO bearbeitet.

## Patentansprüche

1. Verfahren zur Bearbeitung eines Werkstücks zur Fertigung eines Heissgasteils, bei welchem
- ein CAD-Modell für das Werkstück herangezogen wird (3DMod),
- eine aktuelle Form des Werkstück erfasst (ErfIst) und
- mit dem CAD-Modell des Heissgasteils einem Vergleich unterzogen wird,
- abhängig von dem Vergleich ein CAM-Modell für die Bearbeitung bestimmt wird und
- das Werkstück gemäß dem CAM-Modell bearbeitet (CAMPro) wird und nachfolgend
- einer Prüfung unterzogen (INSPEK) wird, wobei abhängig von der Prüfung das CAM-Modell vorzugsweise aktualisiert wird.

2. Verfahren nach Anspruch 1, bei welchem die letzten beiden Verfahrensschritte (CAMPro, INSPEK) des Anspruchs 1 ein- oder mehrfach wiederholt werden, wobei der letzte Verfahrensschritt oder das fakultative Merkmal des letzten Verfahrensschritts nach der letztmaligen Ausführung des vorletzten Verfahrensschritts entfallen kann.

3. Verfahren nach einem der vorhergehenden Ansprüche, bei welchem abhängig von dem Vergleich von dem CAD-Modell des Heissgasteils und der aktuellen Form des Werkstücks das CAM-Modell für die Bearbeitung derart bestimmt wird, dass abhängig von den Vergleich ein Realmodell ermittelt (3DReal) wird und abhängig vom dem Realmodell das CAM-Modell bestimmt wird.

4. Verfahren nach einem der vorhergehenden Ansprüche, bei welchem das Werkstück bearbeitet (CAMPro) wird, indem Kühlkanäle, insbesondere mittels Bohrens, vorzugsweise mittels Laserbohrens, eingebracht werden.

5. Verfahren nach einem der vorhergehenden Ansprüche, bei welchem das Werkstück einer Prüfung (INSPEK) unterzogen wird, indem es einem Wärme- und/oder Fluidstrom durch das Werkstück hindurch ausgesetzt wird.

6. Verfahren nach einem der vorhergehenden Ansprüche, bei welchem das Werkstück bearbeitet (CAMPro) wird, indem das Werkstück, während es bearbeitet wird, fortgesetzt einer Prüfung unterzogen (ONLERF) wird, insbesondere indem es einem Wärme- und/oder Fluidstrom durch das Werkstück hindurch ausgesetzt wird.

7. Verfahren nach einem der vorhergehenden Ansprüche, bei welchem das Werkstück einer Prüfung (INSPEK) unterzogen wird, indem es optisch, insbesondere bildgebend, erfasst wird.

8. Verfahren nach einem der vorhergehenden Ansprüche, bei welchem das Werkstück ein Rohling ist.

9. Verfahren nach einem der vorhergehenden Ansprüche, bei welchem das Werkstück ein im Betrieb verändertes Heissgasteil ist.
